# FASCICULE DE BREVET EUROPEEN

(11) **EP 0 558 600 B1**
(45) Date de publication et mention de la délivrance du brevet: **19.04.1995**
(21) Numéro de dépôt: 92900427.3
(22) Date de dépôt: 22.11.1991
(51) Int. Cl.: G02B 6/04, F21V 8/00, G02F 1/295

(54) **DISPOSITIF POUR EMETTRE DE LA LUMIERE A L'AIDE D'UNE FIBRE OPTIQUE, ET PROCEDE DE MISE EN UVRE DE CE DISPOSITIF**
GERÄT ZUR LICHTEMISSION MIT EINEM OPTISCHEN FASER UND VERFAHREN ZUM EINSATZ DIESES GERÄT
FIBRE-OPTICAL LIGHT-EMITTING DEVICE AND METHOD FOR USING SAME

(30) Priorité: 23.11.1990 FR 9014604
(43) Date de publication de la demande: 08.09.1993
(73) Titulaire: BECHELANI, Jean-François, F-75012 Paris (FR); NAOUM, Joseph, F-75012 Paris (FR); LAUPAU, Yves, F-75018 Paris (FR)
(72) Inventeur: BECHELANI, Jean-François, F-75012 Paris (FR); NAOUM, Joseph, F-75012 Paris (FR); LAUPAU, Yves, F-75018 Paris (FR)
(74) Mandataire: Flavenot, Bernard
(86) Numéro de dépôt international: FR9100925
(87) Numéro de publication internationale: WO9209909

(56) Documents cités:
- EP-A- 0 069 977
- GB-A- 2 174 212
- US-A- 4 422 719
- PATENT ABSTRACTS OF JAPAN, vol. 7, no. 70 (P-185)(1215), 23 mars 1983;& JP-A-58001103

## Description

La présente invention concerne un dispositif pour émettre de la lumière à partir d'une seule source de lumière (lumière visible) raccordée à une extrémité d'une fibre optique.

L'invention a pour but d'obtenir, sur une longueur de fibre importante, pouvant atteindre plusieurs mètres, une quantité de points lumineux colorés (spectre visible), ces points lumineux pouvant être considérés comme des sources auxiliaires lumineuses colorées de couleur unique.

Traditionellement, l'obtention d'une multitude de points lumineux sur une longueur de fil, allant d'un mètre à plusieurs mètres, nécessite d'implanter en chacun de ces points une source de lumière (visible). Il faudra donc autant de sources lumineuses que de points lumineux. L'alimentation de ces sources nécessite souvent deux mêmes fils électriques sinon plus, ainsi qu'une entaille portée sur un de ces fils, en un point quelconque du fil, entraîne une extinction de toutes les sources lumineuses. De plus, de telles réalisations sont sensibles aux interférences, aux vibrations, au brouillage électromagnétique, à d'éventuels courts-circuits, aux problèmes de "boucle de masse". En résumé, les inconvénients observés sont les suivants:
- il faut n sources lumineuses pour n points lumineux,
- les sources lumineuses utilisées sont encombrantes car nécessitent des systèmes d'alimentation et une connectique associée,
- les sources lumineuses sont fragiles de par leur structure (ampoules, diodes, ...),
- systèmes et sources associés sont sensibles à de nombreuses perturbations extérieures.

Il est par ailleurs déjà connu des dispositifs pour émettre de la lumière en différents points à partir d'une source de lumière raccordée à une extrémité d'une fibre optique. De tels dispositifs sont par exemple connus par le Patent ABSTRACTS of JAPAN Vol. 7, N° 70 (P-185) (1215) mars 1983 (correspondant à JP-A-58/1103) et le US-A-4 422 719. Ces documents décrivent tous les deux essentiellement un dispositif pour émettre de la lumière à partir d'une seule source de lumière visible raccordée à une extrémité d'une fibre optique constituée d'un coeur et d'une enveloppe d'indice de réfraction inférieur à celui du coeur comportant une pluralité de zones localisées réparties sur la surface latérale de la fibre, le dispositif comportant des moyens permettant à la lumière véhiculée dans la fibre de s'en échapper au niveau de chaque zone localisée.

Le dispositif selon l'invention permet de remédier aux inconvénients cités précédemment. Il s'appuie sur l'élément de base qu'est la fibre optique (alimentée par une source lumineuse) et sur des procédés issus des technologies de semi-conducteur, ceci afin de créer volontairement le long de la fibre des zones de l'enveloppe où l'indice est tel que la lumière qui s'en échappe apparaisse sous différentes couleurs, ces couleurs étant choisies et contrôlées au préalable.

Plus précisément la présente invention a pour objet un dispositif pour émettre de la lumière en une pluralité de zones localisées, comprenant une source de lumière visible unique; et une fibre optique constituée d'un coeur d'indice de réfraction prédéterminé n2 et d'une enveloppe d'indice de réfraction n1 inférieur à celui du coeur, ladite fibre optique étant couplée par une de ses extrémités à ladite source et comportant, en chacune des zones d'une pluralité de zones localisées réparties sur sa surface latérale, des moyens permettant à la lumière véhiculée dans la fibre de s'échapper de celle-ci au niveau de ladite zone, ledit dispositif étant caractérisé par le fait qu'il comporte en outre, en chacune desdites zones, des moyens absorbants permettant de ne laisser passer qu'une seule des couleurs constitutives de la lumière qui s'échappe de cette zone et d'absorber l'ensemble des autres longueurs d'onde de ladite lumière.

C'est ainsi que, à partir d'une source de lumière (lumière visible) raccordée à une extrémité de la fibre optique modifiée selon l'invention, on obtient sur une longueur de fibre très importante de plusieurs mètres, divers points lumineux colorés (spectre visible du violet au rouge en passant par le bleu, vert, jaune et orange). Cette longueur dépendra de la fibre optique utilisée (fibre optique en verre, fibre optique polymère en polycarbonate ou autres), de l'épaisseur de fibre utilisée.

Les points lumineux colorés obtenus proviennent de zones délimitées de l'enveloppe de la fibre optique, caractérisées:
- d'une part par des indices de réfraction n_{i . j} tels que certains rayons lumineux peuvent s'échapper du coeur de la fibre optique,
- d'autre part que ces zones constituent une absorption (absorption en volume) dans le domaine des longueurs d'onde du visible afin de ne laisser passer que la couleur de lumière que l'on veut.

La fibre optique selon l'invention et, en particulier, les zones délimitées de l'enveloppe, se réalisent de la manière suivante:

D'une structure de fibre optique de base (fibre optique en verre ou fibre optique polymère en polycarbonate ou autres), caractérisée par un coeur d'indice de réfraction n2 et d'une enveloppe d'indice de réfraction n1, tel que n2 soit supérieur à n1 (les indices étant liés au type et à la quantité de dopant utilisé respectivement dans le coeur et dans l'enveloppe). En effet, dans un matériau, pour modifier la valeur de l'indice de réfraction, on joue sur la polarisabilité moyenne des anions ou des cations. Ceux-ci, surtout les gros anions qui par leur polarisabilité fondamentalement plus élevée que celles des cations ont le plus effet sur la vitesse des photons et par là sur l'indice de réfraction. Ainsi une des manières de jouer sur la polarisabilité moyenne des anions et des cations, est de doper le matériau. Par des processus de dopage traditionnels utilisés en microélectronique tels que la diffusion, l'implantation ionique ou autre, qui permettent de contrôler de façon précise la quantité de dopant, la forme du profil de dopage sur des profondeurs variables (quelques fractions de microns et même moins), on réalise tout le long de la fibre optique, des zones de l'enveloppe caractérisées par des concentrations de diverses impuretés dopantes qui permettent d'augmenter l'indice de réfraction de ces zones n_{i . j} (n_{i . j} supérieur à n2, i étant le numéro de la zone et j la couleur de la lumière qui s'échappera de cette zone) et de leur conférer en plus un rôle de fibre optique.

Dans ces zones d'indice n_{i . j} l'on peut produire une concentration de porteurs libres (électrons ou trous) très largement supérieure à la concentration en atomes d'impuretés (dopant). De ce fait l'indice de réfraction n_{i . j} varie. Cela est réalisé par l'effet d'un champ électrique (obtenu par des couches de métallisation, situées de part et d'autre de chaque zone au-dessus de l'enveloppe, alimentées par une tension (+ v₁ - v). Le but étant de rendre l'indice n_{i . j} de la zone inférieur à n2 durant toute la durée de l'application du champ électrique. Il faut noter de plus qu'il y a retour à l'état initial (l'indice de réfraction n_{i . j} supérieur à n2) lors de l'absence du champ électrique. Ainsi cela permet de contrôler l'émission et l'extinction de lumière de façon individuelle en chacune des zones de l'enveloppe.

Ce dispositif répond donc aux inconvénients cités au début:
- d'une source lumineuse principale on peut obtenir n sources lumineuses auxiliaires de différentes couleurs sur une longueur de plusieurs mètres;
- les sources lumineuses auxiliaires ne nécessitent aucun support particulier ni connectique associés;
- les sources lumineuses auxiliaires sont solides et insensibles aux perturbations extérieures. Elles bénéficient de tous les avantages de la fibre optique;
- chaque source lumineuse auxiliaire peut être contrôlées de façon indépendante (extinction, émission de lumière).

Les dessins annexés illustrent l'invention.
La figure 1 représente en coupe, le dispositif selon l'invention,
La figure 2 représente en coupe, une variante de ce dispositif.

En référence à ces dessins, le dispositif est constitué d'une structure de fibre optique de base, c'est-à-dire d'un coeur 1 d'indice n2 et d'une enveloppe 2 d'indice de réfraction n1, n2 étant supérieur à n1. Cette fibre optique est raccordée à une source de lumière visible 3.

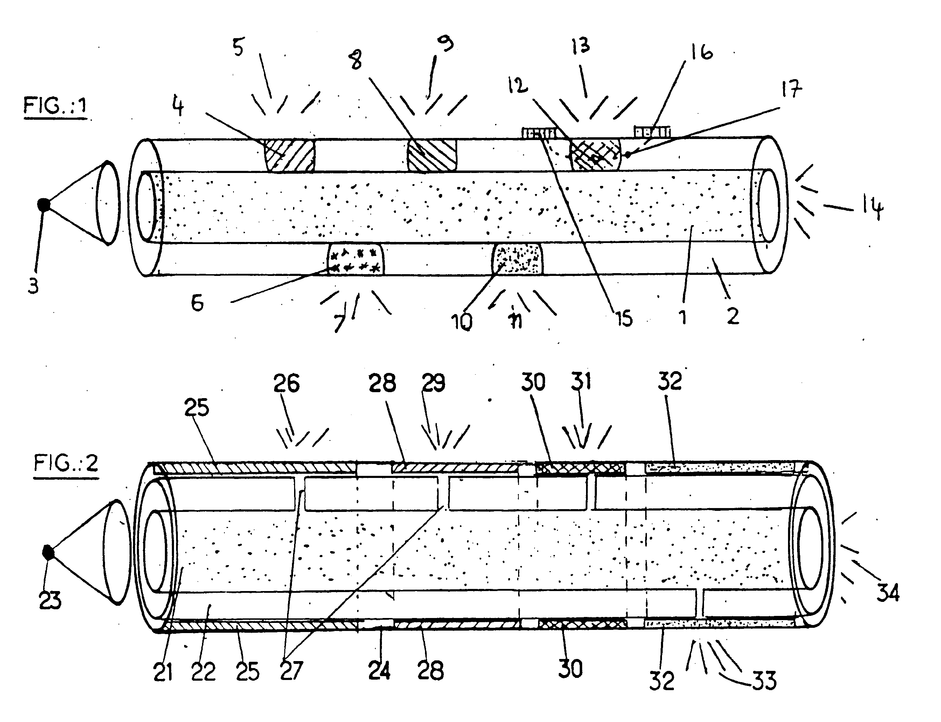

Sur la figure 1, apparaissent différentes zones de l'enveloppe, le nombre de zones étant de cinq sur ce dessin:
- le première zone 4 caractérisée par une concentration en impuretés telle que l'indice de réfraction n_{1 . R} soit supérieur à n2 et que par cette zone de la lumière rouge soit émise 5;
- la deuxième zone 6 caractérisée par une concentration en impuretés telle que l'indice de réfraction n_{2 . V} soit supérieur à n2 et que par cette zone de la lumière verte soit émise 7;
- la troisième zone 8 caractérisée par une concentration en impuretés telle que l'indice de réfraction n_{3 . J} soit supérieur à n2 et que par cette zone de la lumière jaune soit émise 9;
- la quatrième zone 10 caractérisée par une concentration en impuretés telle que l'indice de réaction n_{4 , B} soit supérieur à n2 et que par cette zone de la lumière bleue soit émise 11 ;
- la cinquième zone 12 caractérisée par une concentration en impuretés telle que l'indice de réfraction n_{5 , O} soit supérieure à n2 et que par cette zone de la lumière orange soit émise 13.

De part et d'autre de cette zone des couches de métallisation 15 et 16 sont implantées au-dessus de l'enveloppe. Par ces couches de métallisation transitera une tension d'alimentation + V 15 et - V 16 qui aura pour effet de créer un champ électrique 17 venant modifier l'indice de réfraction n_{5 , O} le rendant inférieur à n2, et d'entraîner l'extinction de lumière au niveau de cette cinquième zone durant toute la durée d'application de la tension d'alimentation. Malgré la sortie de certains rayons lumineux par les cinq zones décrites précédemment, d'autres issues de la source 3 se retrouvent à l'autre extrémité de la figure 14. Si deux zones de l'enveloppe sont caractérisées par les mêmes impuretés (type et concentration), la couleur de lumière émise par ces zones sera identique.

Sur la figure 2 les "zones" ne sont plus dans l'enveloppe mais sont implantées (3ème couche) au-dessus de l'enveloppe. On effectue des entailles le long de la fibre 27 dans l'enveloppe de façon à ce que certains rayons s'échappent du coeur à ces endroits et on recouvre ces entailles par des couches (zones de diverses impuretés caractérisées par des indices de réfraction n_{i,j}) :
- une première zone 25 d'indice n_{1 , R} avec émission de lumière rouge 26 ;
- une deuxième zone 28 d'indice n_{2 , V} avec émission de lumière verte 29 ;
- une troisième zone 30 d'indice n_{3 , J} avec émission de lumière jaune 31 ;
- une quatrième zone 32 d'indice n_{4 , B} avec émission de lumière bleue 33.

Entre chacune de ces zones, 24, l'indice de réfraction est celui de l'enveloppe n1.

Ce dispositif selon l'invention est particulièrement destiné à de nouveaux vêtements ou textiles luminescents. Pour ces applications, la fibre optique de base utilisée sur laquelle s'appuie l'invention, sera la fibre optique polymère en polycarbonate de par sa grande flexibilité, son coût faible, sa manipulation facile, sa grande ouverture numérique.

Ce dispositif concerne également tous les accessoires luminescents touchant aussi bien le prêt à porter (colliers, bracelets, ceintures, cravates....) que les articles de décoration (guirlandes lumineuses, tableaux décoratifs....). Pour ces dernières applications, la fibre optique de base utilisée sera de la fibre optique de verre.

Ce dispositif s'étend aussi aux écrans de visualisation pour ordinateurs (moniteurs), télévisions et autres interfaces visuelles, compte tenu de la capacité du dispositif à pouvoir contrôler de façon précise et indépendante la commande de l'émission et de l'extinction de chaque point lumineux de la fibre, donc de pouvoir contrôler un arrangement de points lumineux (plusieurs fibres rassemblées côte à côte) sur une surface donnée.

## Revendications

1. Dispositif pour émettre de la lumière en une pluralité de zones localisées, comprenant une source de lumière visible unique; et une fibre optique constituée d'un coeur (1) d'indice de réfraction prédéterminé n2 et d'une enveloppe (2) d'indice de réfraction nl inférieur à celui du coeur, ladite fibre optique étant couplée par une de ses extrémités à ladite source (3) et comportant, en chacune des zones d'une pluralité de zones localisées (4, 6, 8, 10, 12; 27) réparties sur sa surface latérale, des moyens permettant à la lumière véhiculée dans la fibre de s'échapper de celle-ci au niveau de ladite zone, ledit dispositif étant caractérisé par le fait qu'il comporte en outre, en chacune desdites zones, des moyens absorbants permettant de ne laisser passer qu'une seule (5, 7, 9, 11, 13; 26, 29, 31, 33) des couleurs constitutives de la lumière qui s'échappe de cette zone et d'absorber l'ensemble des autres longueurs d'onde de ladite lumière.

2. Dispositif selon la revendication 1, caractérisé par le fait que lesdits moyens permettant à la lumière véhiculée par la fibre de s'échapper et lesdits moyens absorbants sont constitués par des impuretés insérées par dopage dans l'enveloppe (2) de la fibre au niveau de chacune desdites zones localisées (4, 6, 8, 10, 12), lesdites impuretés étant en une concentration et d'un type tels que le matériau de l'enveloppe ainsi dopé au niveau de chacune desdites zones localisées présente un indice de réfraction ni,j supérieur à l'indice de réfraction n2 du coeur, permettant ainsi à la lumière de s'échapper de la fibre au niveau desdites zones, et qu'il est capable de laisser passer la seule couleur désirée (5, 7, 9, 11, 13) et d'absorber l'ensemble des autres longueurs d'onde de ladite lumière s'échappant.

3. Dispositif selon la revendication 1, caractérisé par le fait que lesdits moyens permettant à la lumière véhiculée par la fibre de s'échapper au niveau de chacune desdites zones sont constitués par des entailles pratiquées dans l'enveloppe (2) au niveau de ces zones, et par le fait que lesdits moyens absorbants sont constitués par des couches localisées (25, 28, 30, 32) recouvrant lesdites entailles, lesdites couches localisées comprenant des impuretés telles que ces couches sont capables de laisser passer la seule couleur désirée (26, 29, 31, 33) au niveau de chacune desdites zones et d'absorber l'ensemble des autres longueurs d'onde de ladite lumière s'échappant.

4. Dispositif selon la revendication 2, destiné à permettre le contrôle de l'émission et de l'extinction de lumière au niveau d'au moins une (12) desdites zones localisées, caractérisé par le fait que ledit matériau ainsi dopé de l'enveloppe (2) est en outre tel, au niveau de ladite zone contrôlable (12), qu'il est capable, sous l'effet d'un champ électrique, de produire une concentration de porteurs libres très largement supérieure à la concentration en atomes d'impuretés dopantes, suffisante pour rendre l'indice n_{i,j} du matériau dopé inférieur à l'indice de réfraction n2 du coeur, ledit dispositif comportant en outre, de part et d'autre de ladite zone contrôlable (12), des couches de métallisation (15, 16), auxquelles peut être appliquée une tension d'alimentation suffisante pour rendre ledit indice de réfraction ni,j du matériau dopé inférieur à l'indice n2 du coeur, la lumière étant ainsi empêchée de s'échapper de ladite zone contrôlable (12) durant toute la durée d'application de ladite tension d'alimentation.

## Patentansprüche

1. Vorrichtung für das Aussenden von Licht an einer Mehrzahl von lokalisierten Zonen, umfaßend eine einzige Quelle sichtbaren Lichts und eine optische Faser, bestehend aus einem Kern (1) mit einem vorbestimmten Brechungsindex n2 und einer Hülle (2) mit einem Brechungsindex n1, der kleiner ist jener des Kerns, wobei die optische Faser mit einem ihrer Enden an die Quelle (3) angekoppelt ist und in jeder Zone einer Mehrzahl von lokalisierten Zonen (4,6,8,10,12; 27), die auf ihrer seitlichen Oberfläche verteilt sind, Mittel umfaßt, die es dem sich in der Faser ausbreitenden Licht ermöglichen, aus dieser in Höhe der genannten Zone zu entweichen, welche Vorrichtung dadurch gekennzeichnet ist, daß sie ferner in jeder der genannten Zonen absorbierende Mittel aufweist, die es ermöglichen, nur eine einzige (5,7,9,11,13; 26,29,31,33) der Farben durchzulassen, aus denen das Licht besteht, das aus dieser Zone entweicht und die Gesamtheit der anderen Wellenlängen des Lichtes zu absorbieren.

2. Vorrichtung nach Anspruch 1, dadurch gekennzeichnet, daß die Mittel, die dem sich in der Faser ausbreitenden Licht das Entweichen ermöglichen und die absorbierenden Mittel von Verunreinigungen gebildet werden, die durch Dotierung in die Hülle (2) der Faser in Höhe jeder der lokalisierten Zonen (4,6,8,10,12) eingefügt werden, welche Verunreinigungen in einer Konzentration und von einem Typ gewählt sind derart, daß das Material der derart dotierten Hülle in Höhe jeder der genannten lokalisierten Zonen einen Brechungsindex ni,j aufweist, der größer ist als der Brechungsindex n2 des Kerns, was auf diese Weise dem Licht ermöglicht, aus der Faser in Höhe der genannten Zonen zu entweichen und daß es ermöglicht wird, die einzige gewünschte Farbe (5,7,9,11,13) entweichen zu lassen und die Gesamtheit der anderen Wellenlängen des entweichenden Lichts zu absorbieren.

3. Vorrichtung nach Anspruch 1, dadurch gekennzeichnet, daß die Mittel, die es dem sich in der Faser ausbreitenden Licht ermöglichen, in Höhe jeder der genannten Zonen zu entweichen, von Kerben gebildet werden, die in die Hülle (2) in Höhe dieser Zonen eingebracht sind und daß die absorbierenden Mittel von lokalisierten Beschichtungen (25,28,30,32) gebildet sind, welche die Kerben überdecken, welche lokalisierten Beschichtungen Verunreinigungen umfassen derart, daß diese Schichten in der Lage sind, die einzige gewünschte Farbe (26,29,31,33) in Höhe jeder der genannten Zonen passieren zu lassen und die Gesamtheit der anderen Wellenlänge des entweichenden Lichts zu absorbieren.

4. Vorrichtung nach Anspruch 2, bestimmt zum Ermöglichen der Steuerung der Emission und des Erlöschens des Lichts in Höhe von mindestens einer (12) der genannten lokalisierten Zonen, dadurch gekennzeichnet, daß das so dotierte Hüllenmaterial (2) ferner in Höhe der genannten steuerbaren Zone (12) derart ist, daß es unter der Wirkung eines elektrischen Feldes in der Lage ist, eine Konzentration der freien Träger hervorzurufen, die sehr stark höher ist als die Konzentration an Dotierungsverunreinigungsatomen, hinreichend dafür, um den Index ni,j des dotierten Materials kleiner zu machen als den Brechungsindex n2 des Kerns, welche Vorrichtung ferner beidseits der kontrollierbaren Zone (12) Metallisierungsschichten (15,16) umfaßt, an die eine Speisespannung anlegbar ist, welche hinreicht, um den genannten Brechungsindex ni,j des dotierten Materials kleiner als den Index n2 des Kerns zu machen, wobei das Licht auf diese Weise daran gehindert wird, aus der steuerbaren Zone (12) zu entweichen während der gesamten Dauer des Anlegens der genannten Speisespannung.

## Claims

1. A device for emitting light in a plurality of localized zones, the device comprising a single visible light source; and an optical fiber constituted by a core (1) of predetermined refractive index n2 and by cladding (2) of refractive index n1 that is less than that of the core, said optical fiber being coupled at one of its ends to said source (2) and including, in each of the zones in a plurality of localized zones (4, 6, 8, 10, 12; 27) distributed along its outside surface, means enabling the light conveyed by the fiber to escape from the fiber through said zone, said device being characterized by the fact that it further includes at each of said zones, absorbent means allowing only one (5, 7, 9, 11, 13: 26, 29, 31, 33) of the component colors of the light to pass so that it escapes from said zone while absorbing all of the other wavelengths of said light.

2. A device according to claim 1, characterized by the fact that means enabling the light conveyed by the fiber to escape and said absorbent means are constituted by impurities inserted into the cladding (2) of the fiber by doping each of said localized zones (4, 6, 8, 10, 12), said impurities being at a concentration and of a type such that the material of the cladding doped in this way in each of said localized zones has a refractive index n_{i,j} that is greater than the refractive index n2 of the core, thereby enabling light to escape from the fiber through said zones, and that it is capable of passing only the desired color (5, 7, 9, 11, 13) and of absorbing all of the other wavelengths of the said escaping light.

3. A device according to claim 1, characterized by the fact that means enabling the light conveyed by the fiber to escape through each of said zones are constituted by notches formed in the cladding (2) in said zones, and by the fact that said absorbent means are constituted by localized layers (25, 28, 30, 32) overlying said notches, said localized layers including impurities such that the layers are capable of passing only the desired color (26, 29, 31, 33) through each of said zones, while absorbing all of the other wavelengths of said escaping light.

4. A device according to claim 2, for the purpose of controlling light emission and extinction through at least one of said localized zones, the device being characterized by the fact that said material of the cladding (2) doped in this way is further such that at said controllable zone (12) it is capable under the effect of an electric field of producing a concentration of free carries that is much greater than the concentration of doping impurity atoms, sufficient to make the refractive index n_{i,j} of the doped material less than the refractive index n2 of the core, said device further including on either side of said controllable zone (12) layers of metallization (15, 16) to which a power supply voltage can be applied that is sufficient for causing said refractive index n_{i,j} of the doped material to be less than the refractive index n2 of the core, light thus being prevented from escaping through said controllable zone (12) throughout the time that said power supply voltage is applied.
